# EUROPEAN PATENT SPECIFICATION

(11) **EP 3 984 840 B1**
(45) Date of publication and mention of the grant of the patent: **12.02.2025**
(21) Application number: 20202433.7
(22) Date of filing: 16.10.2020
(51) Int. Cl.: B60S 1/04, F16B 21/07

(54) **WINDSCREEN WIPER MOUNTING ASSEMBLY**
SCHEIBENWISCHERMONTAGEANORDNUNG
ENSEMBLE DE MONTAGE D'ESSUIE-GLACE

(43) Date of publication of application: 20.04.2022
(73) Proprietor: Valeo Systèmes d'Essuyage, 78322 Le Mesnil Saint Denis (FR)
(72) Inventor: KUCHLY, Nicolas, 78320 LE MESNIL SAINT DENIS (FR); CHABANNES, Benjamin, 78320 LE MESNIL SAINT DENIS (FR); GARIBALDI, Vincent, 78320 LE MESNIL SAINT DENIS (FR); RENOUX, Pascal, 78320 LE MESNIL SAINT DENIS (FR); SEVELLEC, Pierre, 78322 LE MESNIL SAINT DENIS (FR); ANDRE-MASSE, Laurent, 78322 LE MESNIL SAINT DENIS (FR)
(74) Representative: Valeo Visibility

(56) References cited:
- EP-A2- 0 952 053
- EP-B1- 1 502 828
- WO-A2-2006/081261
- DE-A1- 102004 009 302
- DE-A1- 102008 014 043
- DE-A1- 102014 225 877
- DE-A1- 19 511 580
- FR-A1- 2 973 755
- US-A- 4 114 509

## Description

### TECHNICAL FIELD

The present invention relates to components for a wiper mounting assembly for a moto vehicle, and more particularly to a securing device for a windscreen wiper mounting assembly for a windscreen of a motor vehicle, and a corresponding windscreen wiper mounting assembly.

### STATE OF THE ART

Windscreen wiper are used in motor vehicle and the like, during rainy condition and also for cleaning the windscreen of any dirt or water particles to enable the motor vehicle operator to see properly through the front and rear windscreens of the motor vehicle.

These windscreen wipers are generally fixed to the vehicle body by using connectors. For example, rear windscreen wipers are typically screwed or bolted to the vehicle body, which is quite complex and time consuming due to the use of many parts such as screws and the need of installation tools.

Furthermore, a windscreen wiper mounting assembly comprises generally several separate parts before the final installation to the vehicle body. The transportation of these separate parts requires often several costly separate packaging.

There is thus a need to provide a low-complexity and cost saving technical solution that makes it possible to ensure not only a robust and compact windscreen wiper mounting assembly before the final installation but also a rapid and tool-free installation of the windscreen wiper mounting assembly.

Others examples of a securing devices are described in the documents US4114509 and DE102008014043.

### SUMMARY OF THE INVENTION

The invention provides a solution for solving at least partially this problem

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

According to one aspect, a windscreen wiper mounting assembly comprising a securing device is proposed.

The securing device comprises
a grommet comprising a through channel and an expandable end disposed in one end of the through channel, and
a locking member comprising a pin adapted to be inserted into the through channel.

The grommet comprises further a retention means disposed in the through channel and the securing device is adapted to present
a first configuration in which the pin is partly inserted into the through channel and the retention means is configured to maintain the pin in the through channel, and
a second configuration in which the pin is pushed through the through channel and the expandable end so as to deform the expandable end.

Said securing device has advantageously only two separate parts, which render the securing device practical and less expensive to manufacture.

Moreover, these separate parts are configured to be in an assembled state either in the first configuration, for example a delivery configuration or a transport configuration before the final installation or in the second configuration, for example a secured configuration after the installation of the securing device.

Therefore, the securing device can be advantageously secured to the vehicle body in a more practical way. When the securing device is used in a windscreen wiper mounting assembly, the windscreen wiper mounting assembly can thus be easily secured to the vehicle body of a motor vehicle without using any tool. For example, the expandable end can comprise a plurality of clasping lips and the retention means can comprise a plurality of deformable retention lips. According to an embodiment, the expandable end comprises three clasping lips and the retention means comprises two deformable retention lips.

By way of example with no limitation, the grommet is made in one piece and is made of an expandable material.

Such grommet allows advantageously an easier and more cost efficient fabrication of the securing device and the windscreen wiper mounting assembly. The grommet can for example made of rubber.

According to the invention, a windscreen wiper mounting assembly for a motor vehicle is proposed. The windscreen wiper mounting assembly comprises at least one securing device as defined above and at least one locking arm. Each locking arm is configured to receive a corresponding securing device and comprises a locking means configured to maintain the locking member of the corresponding securing device when the corresponding securing device is in the second configuration.

Such locking means can advantageously provide a reliable and stable connection between the grommet and the locking member of each securing device in the second configuration.

Hence, the windscreen wiper mounting assembly can be securely fixed to the vehicle body of a motor vehicle in an easier way.

According to one embodiment, the locking means comprises at least one locking clip.

Advantageously, such assembly clips can be used to cooperate with limitation means such as a locking ring for securing the engagement between the first peripheral rings and locking clips in the first configuration.

According to another embodiment, the second fixing means comprise a third peripheral ring and a forth peripheral ring, and the first fixing means comprises a second base having a plurality of second locking clips configured to engage the third peripheral ring in the first configuration and the forth peripheral ring in the second configuration.

By way of example and with no limitation, the windscreen wiper mounting assembly is a windscreen wiper mounting assembly for a rear windscreen of a motor vehicle.

According to another aspect, a motor vehicle comprising a windscreen wiper mounting assembly as defined above is also proposed.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a perspective view of an example of motor vehicle comprising at least a windscreen wiper mounting assembly.
Figure 2 shows a perspective view of an example of rear windscreen wiper mounting assembly.
Figure 3 shows an assembled view of an example of securing means for a windscreen wiper mounting assembly in its first configuration.
Figure 3a shows a cross sectional view of the securing means of figure 3.
Figure 4 shows an assembled view of an example of securing means for a windscreen wiper mounting assembly in its second configuration.
Figure 5 shows a reversed assembled view of an example of securing means for a windscreen wiper mounting assembly in its second configuration.
Figure 5a shows a cross sectional view of the securing means of figure 5.

### DETAILED DESCRIPTION OF THE INVENTION

Hereinafter, embodiments of the present invention will be described with reference to the accompanying drawings.

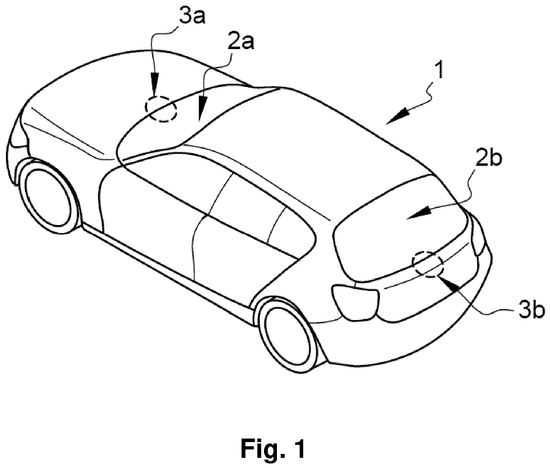

Figure 1 shows a perspective view of a motor vehicle 1 comprising at least one optical surface, here for example a front windscreen 2a and a rear windscreen 2b and at least one windscreen wiper mounting assembly, here for example a front windscreen wiper mounting assembly 3a and a rear windscreen wiper mounting assembly 3b.

The front and rear windscreen wiper mounting assemblies 3a and 3b are configured to be fixed to the vehicle body of the motor vehicle 1, respectively close to the front windscreen 2a and the rear windscreen 2b in order to clean respectively the front windscreen 2a and the rear windscreen 2b.

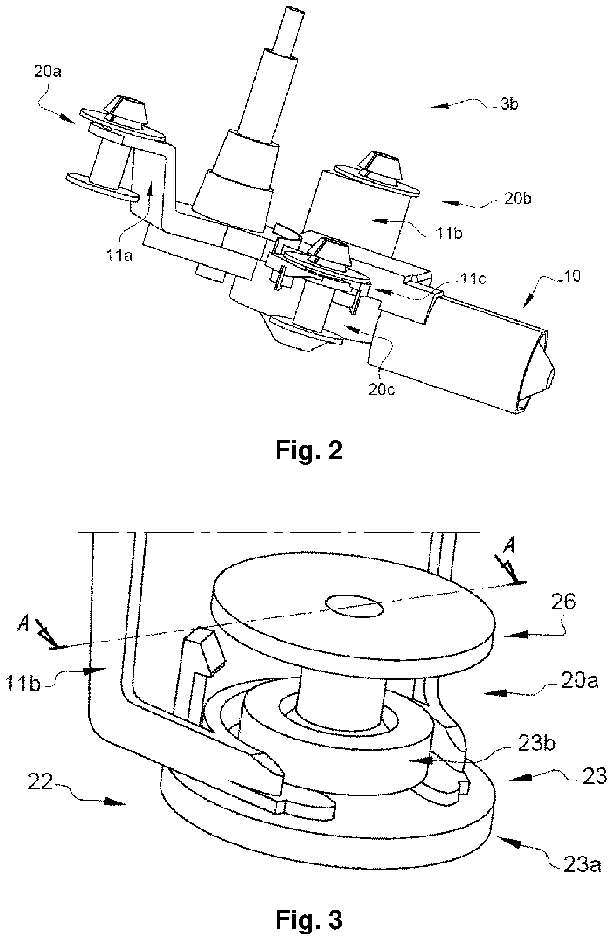

We refer to figure 2 illustrating a perspective view of an example of the rear windscreen wiper mounting assembly 3b.

The rear windscreen wiper mounting assembly 3b comprises
a rear wiper motor 10,
a motor cover 11 fixed to the rear wiper motor 10 and comprising three locking arms 11a, 11b, 11c, and
at least one securing device, here for example three securing devices 20a, 20b, 20c, each securing device 20a, 20b, 20c being fixed to a corresponding locking arms 11a, 11b, 11c.

Alternatively, the rear windscreen wiper mounting assembly 3b can also comprise a support frame (not shown in the figure2) having three upper arms fixed respectively to a corresponding securing device 20a, 20b, 20c in order to facilitate the installation process of the three securing devices 20a, 20b, 20c.

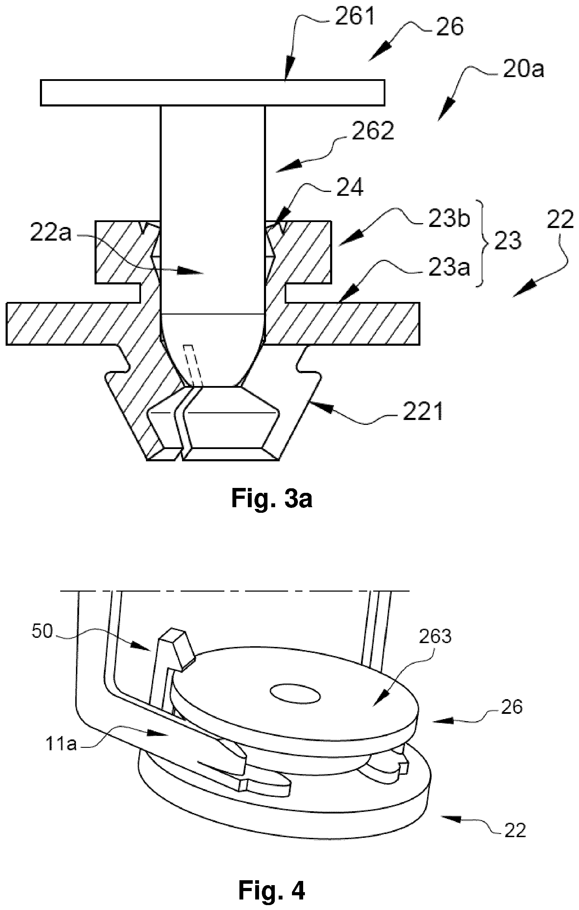

Figure 3 shows a perspective view of an example of a securing means, here the securing means 20a, engaged with a corresponding locking arm, here the locking arm 11a, of the rear windscreen wiper mounting assembly 3b.

The securing means 20a illustrated in the figure 3 comprises a grommet 22 and a locking member 26 disposed in an assembled state.

The securing means 20a is adapted to present a first configuration and second configuration. The first configuration corresponds to a configuration of the securing means 20a for transport or delivery before the installation and the second configuration corresponds to a configuration of the securing means 20a once installed and fixed to the vehicle body of the moto vehicle 1.

The securing means 20a illustrated in the figure 3 is in the first configuration and figure 3a illustrates an A-A cross-sectional view of the securing means 20a shown in the figure 3.

As shown in the figure 3a, the grommet 22 comprises a grommet body 23 and a through channel 22a traversing the center of the grommet body 23.

The grommet body 23 is, for example, a round grommet body having a first panel 23a and a second panel 23b smaller than the first panel 23a. A concave space is formed between the first panel 23a and the second panel 23b and is configured to receive the corresponding locking arm 11a, as shown in the figure 3.

The grommet 22 comprises further an expandable end 221 (figure 3a) disposed in one end, here the end of the first panel 23a of the through channel 22a and a retention means 24, here a plurality of, for example two, deformable retention lips, disposed in the through channel 22a.

The expandable end 221 of the grommet 22 comprises a plurality of clasping lips, here for example three clasping lips bent towards the center of the grommet 22 in the first configuration.

The locking member 26 comprises a base, here for example a round base 261 and a pin 262 disposed in the center of the round base 261.

As shown more clearly in the figure 3a, the internal surfaces of the bent clasping lips 221 have a form corresponding to the form of the front end of the pin 262 and form an abutment position of the pin 262 in the through channel 22a in the first configuration.

In addition, the deformable retention lips 24 are deformed by the pin 262 inserted in the through channel 22a such that the pin is reliably and stably maintained in the through channel 22a by the deformed retention lips 24 in the first configuration.

Compared to classical solutions using a supplementary third piece, generally made of plastic, disposed between the grommet 22 and locking member 26, the present technical solution with only two piece 22 and 26 allows advantageously not only reducing the number of the necessary pieces but also facilitating the insertion of the pion 262 thanks to the better expandability of rubber in comparison with plastic.

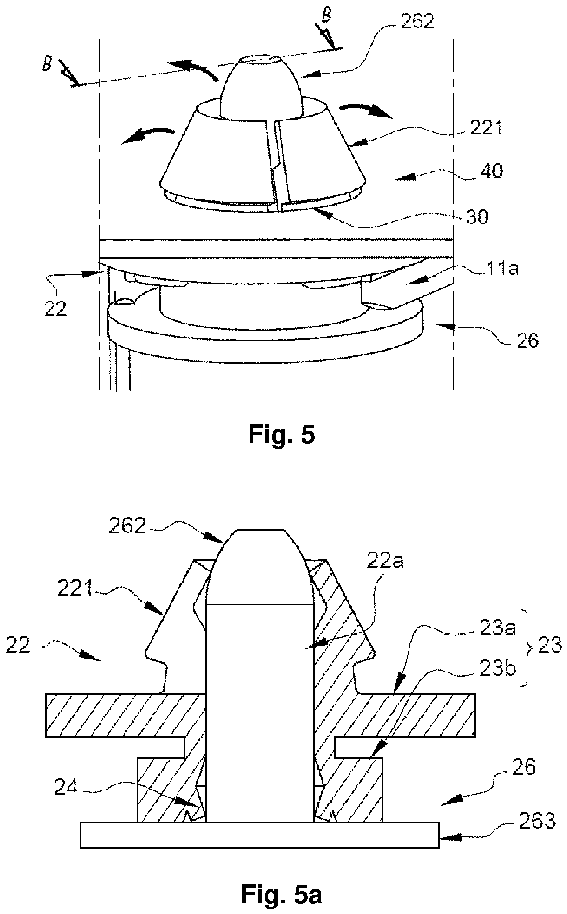

The examples of the securing means 20a illustrated in the figures 4 and 5 are in the second configuration and the figure 5a illustrates a B-B cross-sectional view of the securing means 20a shown in the figure 5.

The expandable end 221 is configured to be fitted into an installation orifice 30 (figure 5) of a vehicle body, here for example a steel plate 40 (figure 5) of the tailgate of the motor vehicle 1 when the expandable end 221 is in its minimal dimension in the first configuration.

The pin 262 of the locking member 26 is then configured to be pushed to pass through the through channel 22a as well as the expandable end 221. As shown in the figures 5 and 5a, the expandable end 221 is expanded from the center of the such that the dimension of the expandable end 221 turns to be greater than that of the installation orifice 30. Consequently, the securing device 20a is securely fixed to the steel plate 40 of the motor vehicle 1.

The locking arm 11a comprises further a locking means 50 configured to maintain the locking member 26 when the locking member 26 is in the second configuration.

The locking means 50 comprises at least one locking clip, here for example one locking clip 50, configured to engage the locking member 26.

By the way of example with no limitation, the locking clip 50 engages the round base 263 of the locking member 26, which limits translational movements of the securing device 20a along the through channel 22a. As a result, the securing device 20 is securely fixed to the vehicle body 40 in the second configuration.

Hence, such securing device 20a allows advantageously an easier and quicker fixation of the windscreen wiper mounting assembly to the vehicle body of a motor vehicle without using any supplementary tools.

Furthermore, only two pieces are needed in such securing device 20a to ensure a reliable and stable connection not only during the transport or delivery process (the first configuration) but also after the installation process, which renders the securing device easier and less expensive to fabricate.

## Claims

1. Windscreen wiper mounting assembly for a motor vehicle (1) comprising at least one securing device (20a, 20b, 20c), the securing device (20a, 20b, 20c) comprising
a grommet (22) comprising a through channel (22a) and an expandable end (221) disposed in one end of the through channel (22a), and
a locking member (26) comprising a pin (262) adapted to be inserted into the through channel (242),
wherein the grommet (22) comprises further a retention means (24) disposed in the through channel (22a) and the securing device (20a, 20b, 20c) is adapted to present
- a first configuration in which the pin (262) is partly inserted into through channel (22a) and the retention means (24) is configured to maintain the pin (262) in the through channel (22), and
- a second configuration in which the pin (262) is pushed through the through channel (22a) and the expandable end (221) so as to deform the expandable end (221).
**characterized in that** the windscreen wiper mounting assembly for a motor vehicle (1) further comprises at least one locking arm (30), each locking arm (11a, 11b, 11c) being configured to receive a corresponding securing device (20a, 20b, 20c) and comprising a locking means (50) configured to maintain the locking member (26) of the corresponding securing device (20a) when the corresponding securing device (20a) is in the second configuration.

2. Windscreen wiper mounting assembly for a motor vehicle (1) according to the preceding claim, wherein the expandable end (221) comprises a plurality of clasping lips and the retention means (24) comprises a plurality of deformable retention lips.

3. Windscreen wiper mounting assembly for a motor vehicle (1) according to the preceding claim, wherein the expandable end (221) comprises three clasping lips and the retention means (24) comprises two deformable retention lips.

4. Windscreen wiper mounting assembly for a motor vehicle (1) according to any of the preceding claims, wherein the grommet (22) is made in one piece and is made of an expandable material.

5. Windscreen wiper mounting assembly for a motor vehicle (1) according to the preceding claim, wherein the grommet is made of rubber.

6. Windscreen wiper mounting assembly according to any of the preceding claims, wherein the locking means (50) comprises at least one locking clip.

7. Windscreen wiper mounting assembly according to the preceding claim, is a windscreen wiper mounting assembly (3b) for a rear windscreen of a motor vehicle (2b).

8. Motor vehicle comprising a windscreen wiper mounting assembly (3b) according to any of claims 1 to 7.

## Patentansprüche

1. Scheibenwischermontagebaugruppe für ein Kraftfahrzeug (1), umfassend mindestens eine Sicherungsvorrichtung (20a, 20b, 20c), wobei die Sicherungsvorrichtung (20a, 20b, 20c) Folgendes umfasst eine Dichtung (22), die einen Durchgangskanal (22a) und ein dehnbares Ende (221) umfasst, das in einem Ende des Durchgangskanals (22a) angeordnet ist, und
ein Verriegelungselement (26), das einen Stift (262) umfasst, der dazu ausgelegt ist, in den Durchgangskanal (242) eingeführt zu werden,
wobei die Dichtung (22) ferner ein Rückhaltemittel (24) umfasst, das in dem Durchgangskanal (22a) angeordnet ist, und wobei die Sicherungsvorrichtung (20a, 20b, 20c) dazu ausgelegt ist, Folgendes darzustellen
- eine erste Konfiguration, bei der der Stift (262) teilweise in den Durchgangskanal (22a) eingeführt ist und das Rückhaltemittel (24) dazu konfiguriert ist, den Stift (262) in dem Durchgangskanal (22) zu halten, und
- eine zweite Konfiguration, bei der der Stift (262) durch den Durchgangskanal (22a) und das dehnbare Ende (221) geschoben ist, um das dehnbare Ende (221) zu verformen.
**dadurch gekennzeichnet, dass** die Scheibenwischermontagebaugruppe für ein Kraftfahrzeug (1) ferner mindestens einen Verriegelungsarm (30) umfasst, wobei jeder Verriegelungsarm (11a, 11b, 11c) dazu konfiguriert ist, eine entsprechende Sicherungsvorrichtung (20a, 20b, 20c) aufzunehmen, und ein Verriegelungsmittel (50) umfasst, das dazu konfiguriert ist, das Verriegelungselement (26) der entsprechenden Sicherungsvorrichtung (20a) zu halten, wenn sich die entsprechende Sicherungsvorrichtung (20a) in der zweiten Konfiguration befindet.

2. Scheibenwischermontagebaugruppe für ein Kraftfahrzeug (1) nach dem vorhergehenden Anspruch, wobei das dehnbare Ende (221) mehrere Klammerlippen umfasst und das Rückhaltemittel (24) mehrere verformbare Rückhaltelippen umfasst.

3. Scheibenwischermontagebaugruppe für ein Kraftfahrzeug (1) nach dem vorhergehenden Anspruch, wobei das dehnbare Ende (221) drei Klammerlippen umfasst und das Rückhaltemittel (24) zwei verformbare Rückhaltelippen umfasst.

4. Scheibenwischermontagebaugruppe für ein Kraftfahrzeug (1) nach einem der vorhergehenden Ansprüche, wobei die Dichtung (22) einstückig hergestellt ist und aus einem dehnbaren Material hergestellt ist.

5. Scheibenwischermontagebaugruppe für ein Kraftfahrzeug (1) nach dem vorhergehenden Anspruch, wobei die Dichtung aus Gummi hergestellt ist.

6. Scheibenwischermontagebaugruppe nach einem der vorhergehenden Ansprüche, wobei das Verriegelungsmittel (50) mindestens einen Verriegelungsclip umfasst.

7. Scheibenwischermontagebaugruppe nach dem vorhergehenden Anspruch, die eine Scheibenwischermontagebaugruppe (3b) für eine Heckscheibe eines Kraftfahrzeugs (2b) ist.

8. Kraftfahrzeug, umfassend eine Scheibenwischermontagebaugruppe (3b) nach einem der Ansprüche 1 bis 7.

## Revendications

1. Ensemble de montage d'essuie-glace pour véhicule à moteur (1) comprenant au moins un dispositif de fixation (20a, 20b, 20c), le dispositif de fixation (20a, 20b, 20c) comprenant
un œillet (22) comprenant un canal traversant (22a) et une extrémité extensible (221) disposée dans une extrémité du canal traversant (22a), et
un élément de verrouillage (26) comprenant une broche (262) conçue pour être insérée dans le canal traversant (242),
l'œillet (22) comprenant en outre un moyen de retenue (24) disposé dans le canal traversant (22a) et le dispositif de fixation (20a, 20b, 20c) étant conçu pour présenter
- une première configuration dans laquelle la broche (262) est partiellement insérée dans le canal traversant (22a) et le moyen de retenue (24) est conçu pour maintenir la broche (262) dans le canal traversant (22), et
- une seconde configuration dans laquelle la broche (262) est poussée à travers le canal traversant (22a) et l'extrémité extensible (221) de sorte à déformer l'extrémité extensible (221),
**caractérisé en ce que** l'ensemble de montage d'essuie-glace pour véhicule à moteur (1) comprend en outre au moins un bras de verrouillage (30), chaque bras de verrouillage (11a, 11b, 11c) étant conçu pour recevoir un dispositif de fixation (20a, 20b, 20c) correspondant et comprenant un moyen de verrouillage (50) conçu pour maintenir l'élément de verrouillage (26) du dispositif de fixation (20a) correspondant lorsque le dispositif de fixation (20a) correspondant se trouve dans la seconde configuration.

2. Ensemble de montage d'essuie-glace pour véhicule à moteur (1) selon la revendication précédente, l'extrémité extensible (221) comprenant une pluralité de lèvres de serrage et le moyen de retenue (24) comprenant une pluralité de lèvres de retenue déformables.

3. Ensemble de montage d'essuie-glace pour véhicule à moteur (1) selon la revendication précédente, l'extrémité extensible (221) comprenant trois lèvres de serrage et le moyen de retenue (24) comprenant deux lèvres de retenue déformables.

4. Ensemble de montage d'essuie-glace pour véhicule à moteur (1) selon l'une quelconque des revendications précédentes, l'œillet (22) étant fabriqué d'un seul tenant et étant en un matériau extensible.

5. Ensemble de montage d'essuie-glace pour véhicule à moteur (1) selon la revendication précédente, l'œillet étant en caoutchouc.

6. Ensemble de montage d'essuie-glace selon l'une quelconque des revendications précédentes, le moyen de verrouillage (50) comprenant au moins un clip de verrouillage.

7. Ensemble de montage d'essuie-glace selon la revendication précédente, qui est un ensemble de montage d'essuie-glace (3b) pour un pare-brise arrière (2b) d'un véhicule à moteur.

8. Véhicule à moteur comprenant un ensemble de support d'essuie-glace (3b) selon l'une quelconque des revendications 1 à 7.
